Europäisches Patentamt

European Patent Office

Office européen des brevets

(11) Publication number: **0 211 155**
**A2**

# (12) EUROPEAN PATENT APPLICATION

(21) Application number: 86106377.4

(22) Date of filing: 10.05.86

(51) Int. Cl.⁴: **B01D 35/00** , B01D 23/28

(30) Priority: 09.08.85 US 763870

(43) Date of publication of application:
25.02.87 Bulletin 87/09

(84) Designated Contracting States:
DE FR GB IT

(71) Applicant: Becton Dickinson and Company
One Becton Drive
Franklin Lakes New Jersey 07417-1880(US)

(72) Inventor: Laguette, Stephen W.
278 Spruce Drive
Goleta California 93117(US)
Inventor: Leicht, Edward C.
301 W. Vineyard Avenue, No. 469
Oxnard California 93030(US)

(74) Representative: Selting, Günther, Dipl.-Ing. et
al
Deichmannhaus am Hauptbahnhof
D-5000 Köln 1(DE)

(54) Disposable filter unit.

(57) A single use disposable filter unit is provided comprised of only two parts joined together, and with those parts configured to support the filter membrane without any additional parts. In addition, the arrangement herein provides for the joining of the two parts of the unit together simultaneously with the sealed annular seating of the periphery of the filter membrane with the filter unit body. Moreover, a decanting spout is incorporated into the unit without the need for a separate air vent.

Fig. 1

## DISPOSABLE FILTER UNIT

### BACKGROUND AND DESCRIPTION OF THE INVENTION

This invention relates to methods and apparatus for producing a filter unit for use in laboratories to handle biological fluids, and to such units so produced. More particularly, this invention relates to such a filter unit which is a single use throwaway unit. That is, the unit is sterilized upon manufacture and sealed in a package for a single use. It is comprised of a material which is degradable under conditions necessary for resterilization so that the unit will degrade and be non-usable after the single use. Because of possible contamination, it is important that once items are used in a laboratory and exposed to biological fluids, that they be destroyed so as not to contaminate laboratory technicians or anyone who may come into contact with such items.

In addition, the filter unit of the invention is a single unitized structure with a cap covering the top thereof. That is, the unit is comprised of an upper and a lower chamber. The upper chamber or part includes an integral supporting bottom wall for receiving and supporting a filter membrane thereon. The surface of the bottom wall is con figured with an annular ledge for seating the annular periphery of the filter for subsequent joining of the periphery of the filter to the surface. The same bottom surface is configured to have proper channeling of the filtrate, once it passes through the filter for discharge into the bottom chamber of the filter unit of the invention. The upper and lower chambers of the filter unit of the invention are joined together by sonic welding. More particularly, these two units are joined together by sonic welding simultaneously with the sonic welding of the periphery of the membrane filter to the bottom surface of the upper chamber. Thus, in one operation, the entire unit of the invention is assembled for use as a single unitary structure. There is no need for any separate parts for supporting and/or holding the membrane in place for the filtering operation. Alternatively, the membrane filter may be joined to the upper chamber in one operation, and that structure subsequently joined to the lower chamber. Such two-step operations may be appropriate to utilize, efficiently, equipment on hand or to conform more readily to existing production facilities.

The process for producing the filter unit of the invention includes the use of an "energy director" form of energy producing sonic horn surface for joining the parts together. That is, the engaging surface of the horn may include a knurled pattern or a pattern of circular projections in order to direct to limited areas the sonic energy expended for that purpose. Included in this combination procedure for achieving the outstanding results, in accordance with this invention are energy directors built into the parts being joined so as, again, to direct energy to specific areas of parts engaging surfaces to achieve the best joining possible between two parts. As a further aspect of this invention for controlling the positioning of the parts being joined, an applied vacuum is imparted for controlling the parts during the application of the energy required to join the parts. Thus, the combination of applied vacuum and the use of energy detectors between the cooperating surfaces of the sonic horn and parts being joined, as well as between the cooperating surfaces of the parts themselves, has the effect of providing a positively joined area between the two or three parts of the device of the invention, depending upon which of the two alternative procedures is being utilized.

In addition, the invention includes in the lower chamber portion of the filter unit thereof, an enlarged spout for decanting the filtrate from the bottom chamber or container portion of the unit of the invention. The spout is enlarged to the degree necessary to avoid interference with the flow of the decanted fluid from the container with replacement air passing in the opposite direction through the spout to gain entry into the container for replacing the volume in the container for the liquid being decanted. In the past, arrangements included complicated separate vent structures in the spout for passing the air therethrough. Such arrangements are more costly for a single use disposable filter unit, as will be understood.

Representative prior art structures include those disposable filter units described and claimed in U.S. Patents 3,295,686 and 4,357,240. The unit described in U.S. Patent 3,295,686, for example, consists of a reservoir for holding the liquid to be filtered, a separate receptacle for receiving the filtrate, and a support member for holding the filter medium, as well as the actual filter medium itself. All of these components are assembled by welding to form a unitary structure. This construction requires several different components which must be fitted together and attached one to another. The unit described in U.S. Patent 4,357,240 is an improvement over the earlier structure in that it teaches a one-piece unit in the sense that the upper and lower containers are a unitary structure. However, the device requires a separate and involved support structure for the membrane. Thus, that separate support structure must be seated in place prior to the addition of the filter membrane for carrying out the filtration procedures of the unit.

By contrast, with the invention herein, the support arrangement for the membrane is an integral part of the upper container portion of the unit. Thus, no separate provisions must be made for supporting the membrane. The membrane merely has to be placed in position and the periphery thereof welded in place by a sonic welding application. Thus, a one-piece structure is provided including the membrane itself properly anchored and supported for use.

Other objects and advantages of this invention will be apparent from the following description, the accompanying drawings and the appended claims.

DESCRIPTION OF THE DRAWINGS

Fig. 1 is a side elevational sectional view of the unitary disposable filter unit of the invention;

Fig. 2 is an enlarged sectional view of the portion of the showing of Fig. 1 circled and designated A and showing the detailed structure for the simultaneous sonic welding of the parts of the unit of the invention together;

Fig. 3 is a top plan view of the device of Fig. 1 with the top removed and prior to the insertion of a filter membrane into the unit;

Fig. 4 is a sectional view taken along lines 4-4 of Fig. 3;

Fig. 5 is a sectional view taken along lines 5-5 of Fig. 4.

Figs. 6a-6g are a schematic illustration of a series of steps for joining together the parts of the unit of the invention in a single simultaneous sonic welding procedure;

Figs. 7a-7j are a schematic illustration of a series of steps for joining together the unit of the invention in a two-step alternative sonic welding procedure;

Fig. 8a is a plan view of the bottom surface of a sonic welding horn illustrating the knurl pattern utilized in the process of the invention;

Fig. 8b is an illustration of the detail of the knurl pattern of Fig. 8a;

Fig. 9a is a detailed illustration showing an alternative arrangement of pattern on the bottom surface of the sonic welding horn in which a circular pattern of ridges or rings are ranged on that surface; and

Fig. 9b is an alternative configuration of rings for the bottom surface of the sonic horn for engaging the parts to be joined together.

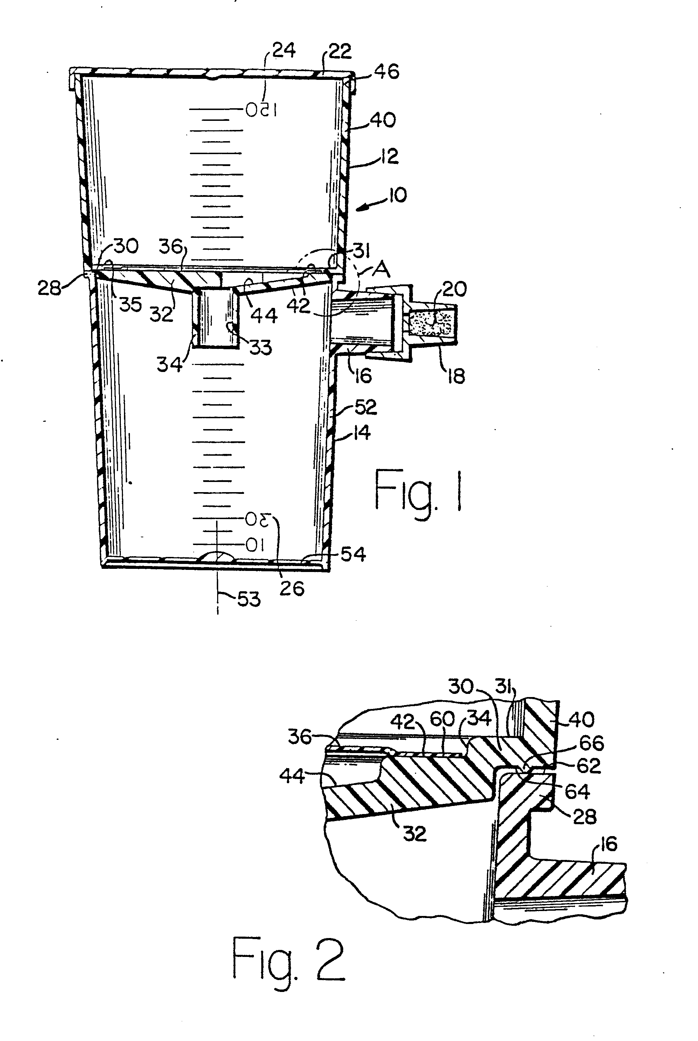

Referring to the drawings in which like reference characters refer to like parts throughout the several views thereof, in Fig. 1 a sectional view in elevation of the device of the invention is shown and indicated generally at 10, with the device having an upper chamber or container portion 12 and a lower chamber portion 14. Lower chamber portion 14 includes an annular generally vertical wall 52 and a bottom surface 54. Wall 52 diverges slightly from the axis 53 of the unit from the bottom surface 54 to the top flange 28 thereof.

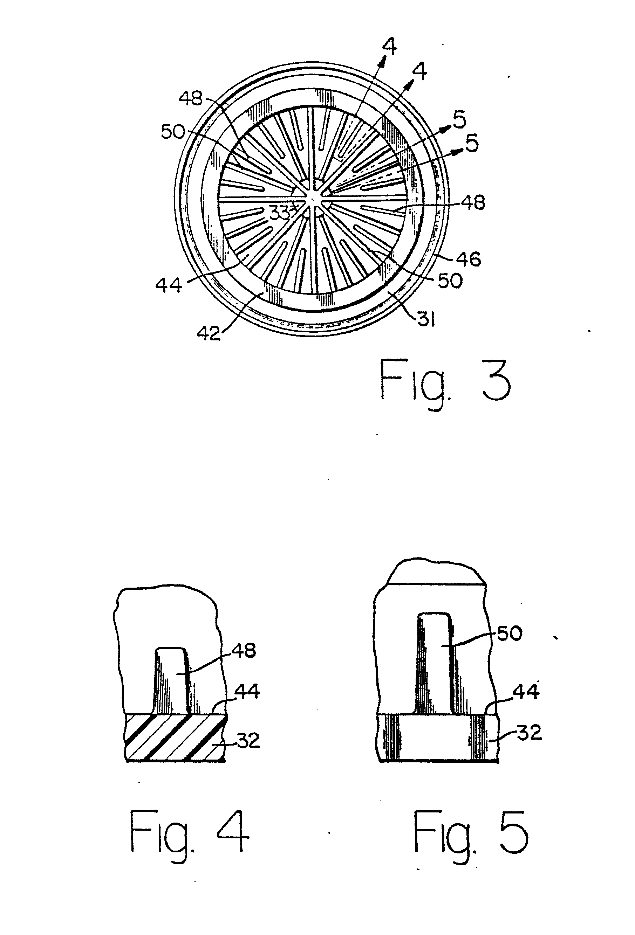

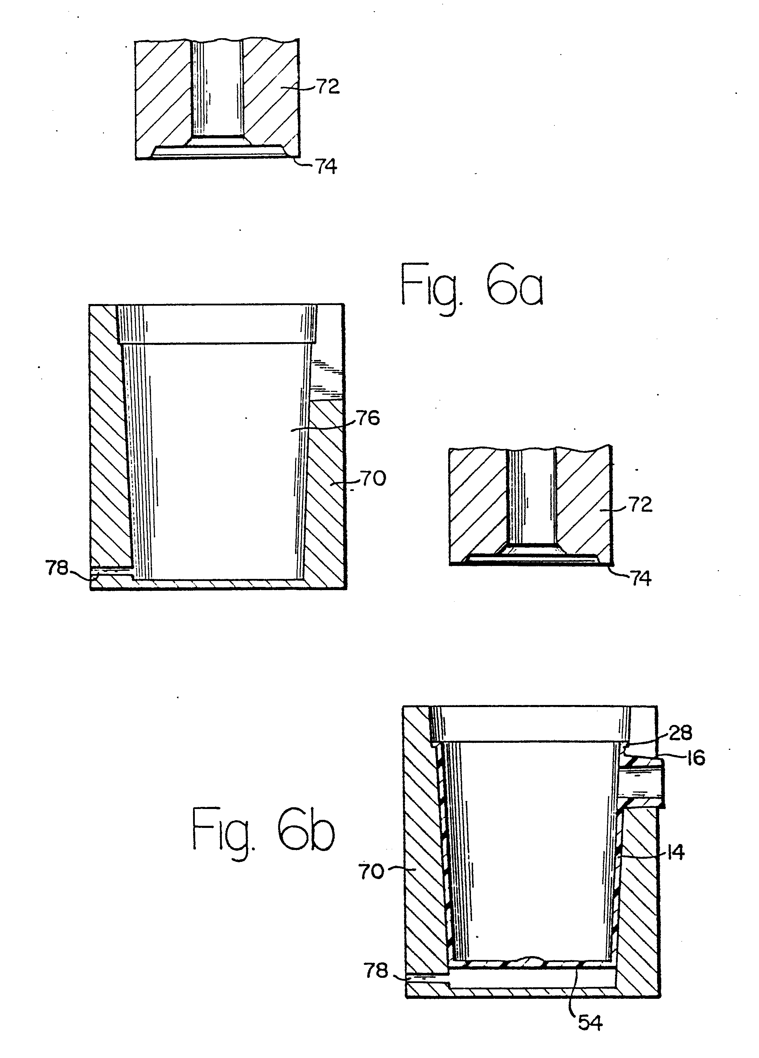

The upper container or chamber portion 12 includes an annular vertical wall 40 which, again, diverges from a lower flange 30 thereof upwardly toward the top edge 46 thereof, as can be clearly seen in Fig. 1. Upper container 40 includes an integral bottom wall 32. Wall 32 has a flat surface 42 formed of an annular area defined by an abutment 35 formed adjacent annular flange portion 30 integral with the lower edge of annular wall 40. The remainder of flat surface 42 is comprised of a plurality of circumferentially spaced long ribs 50 shown in Figs. 3 and 5, and described in more detail below. This top surface 42 serves as the support for the membrane 36 placed there. In between ribs 50 are alternating ribs 48 which are shorter in height and length than ribs 50, but which serve as a further central support for membrane 36. In between the ribs 48, 50 is an angled surface 44 which serves as a drain surface for gathering filtrate passing through membrane 36 and directing it to an annular outlet 34 centered in the bottom of the bottom wall 32 of the upper container 12 and coaxial with the axis thereof.

The top of container 12 includes a cap 22 for press fit engagement onto the top edge 46 of annular wall 40 for maintaining any liquid introduced into the unit contained in the unit once it is introduced. Both the upper 12 and the lower 14 containers include a scale 24, 26, respectively, for indicating the amount of fluid introduced or contained in each portion of the unit.

The lower chamber 14 includes an integral spout 16 for use in decanting the filtrate, once it is collected in the lower chamber 14. The spout is configured to have a dimension large enough to encourage the easy decanting of liquid filtrate from the unit, while still allowing for the introduction of replacement air in the opposite direction. This arrangement reduces substantially the cost of the unit while eliminating the need of a separate air vent. An adapter 18 is utilized having a cotton filter 20 for fitting over spout 16 if a vacuum is applied to the filter unit during the separation process. The cotton has the effect of maintaining sterility of the filtrate collected in lower receptacle 14. Adapter 18 provides the proper size nozzle for fitting to a vacuum source.

Referring now to Fig. 2, an enlarged view of that portion designated A in Fig. 1 is shown. The view indicates the positioning of the upper integral flange 28 of bottom container or unit 14, and the lower integral flange 30 of the upper annular wall 40 of the upper chamber 12. The cooperating surfaces 62, 64 thereof are shown prior to a sonic weld application to indicate in detail the annular ridge 66 or energy director formed in surface 64 to which the weld application is made to join the upper and lower units 12, 14 together. It should be understood, in this connection, that it is within the purview of this invention to include more than one ridge or ring 66 to serve as energy directors during the forming procedure as discussed below in more detail.

Also shown in Fig. 2, is the top surface 42 of the bottom wall 32 of upper unit 12. As can be seen, the annular outer circumferential extent 60 of membrane 36 is joined to surface 42 as by a sonic weld application. Thus, with the unit of the invention, the two sonic weld applications can be made either separately or simultaneously so that the upper and lower units are joined together as a single unit with the membrane 36 anchored in place for use. The user need only remove the unit from its packaging, remove the cap 22 and introduce the biological fluid to be filtered.

Referring to Fig. 3, the top surface 42 of bottom wall 32 is shown. Surface 42 includes a plurality of circumferentially spaced alternating long ribs 50 and short ribs 48, which serve to provide the supporting surface for the ultimately placed membrane 36. Alternating between the ribs 48, 50 is a "ramp" surface 44, which serves to direct the fluid downwardly and centrally toward the central opening 33 formed by the annular outlet 34. Also shown in Fig. 3 is the annular top surface 31 of integral flange 30 formed adjacent the bottom of annular wall 40, and joined to surface portion 42 by step or abutment 35 and which forms the surface upon which the outer peripheral portion 60 of membrane 36 is adhered by sonic welding as discussed above. Figs. 4 and 5 show sectional views of the ribs 48 and 50. As purely illustrative of dimensions for the ribs 48, 50, the top surface of each of ribs 48, 50 may be 1.02 millimeters, for example. The height of ribs 48, may be, for example, 2.36 millimeters, while the height of ribs 50 may be 3.56 millimeters.

Referring now to Figs. 6a-6g, a series of steps is shown for joining together the various components of the unit of the invention by a single one-step sonic weld application. Thus, Fig. 6a shows an embedding horn and assembly fixture prior to the insertion of any components of the unit of the invention to be formed. That is, an assembly fixture 70 is shown which is annular in shape and defines a space 76 for receiving a portion of the assembly to be joined together. Assembly fixture 70 has a vent 78 adjacent the bottom surface thereof in order to vent the area 76 when a part to be joined is received therein. The lower portion of an embedding horn 72 is shown. The sonic welding energy is directed from the horn 72 through the engaging surface 74 thereof. Referring now to Fig. 6b, the assembly fixture 70 is shown with the lower chamber portion of the unit of the invention in place with the bottom surface 54 of the chamber 14 engaging the bottom surface of the assembly fixture 70. As can be seen in Fig. 6b, the lower chamber portion 14 has the integral spout 16 extending outwardly from the assembly fixture 70 and the upper annular edge or flange 28 of chamber 14 is exposed for the receipt of sonic energy from the lower surface 74 of horn 72.

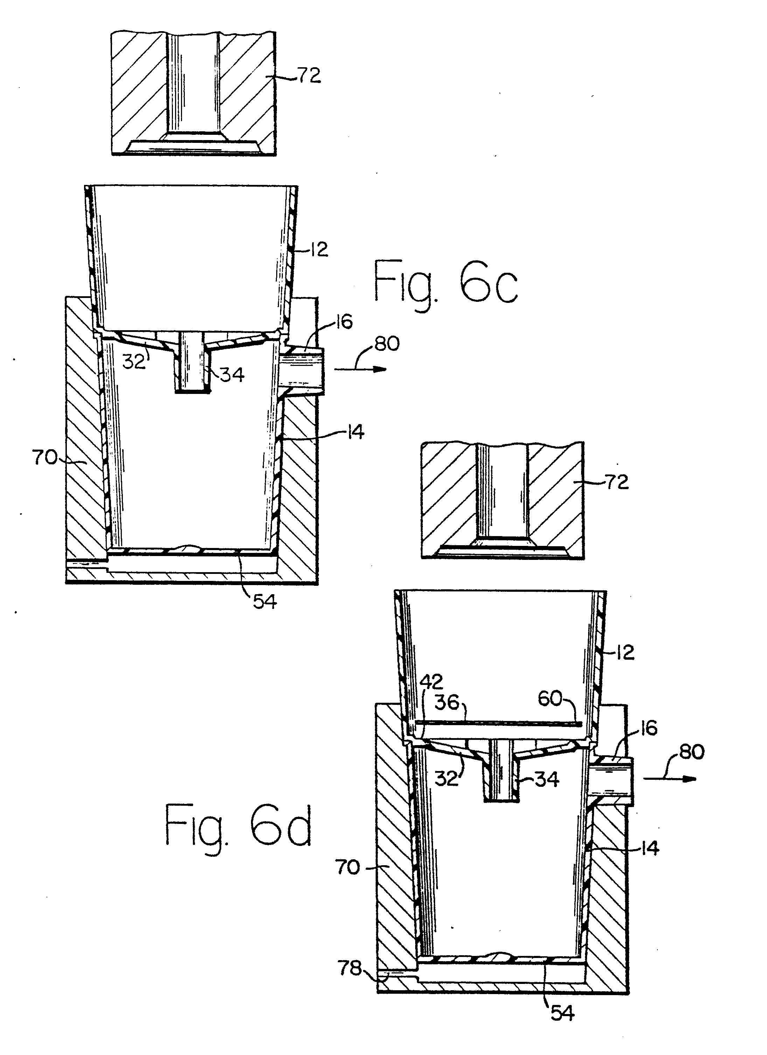

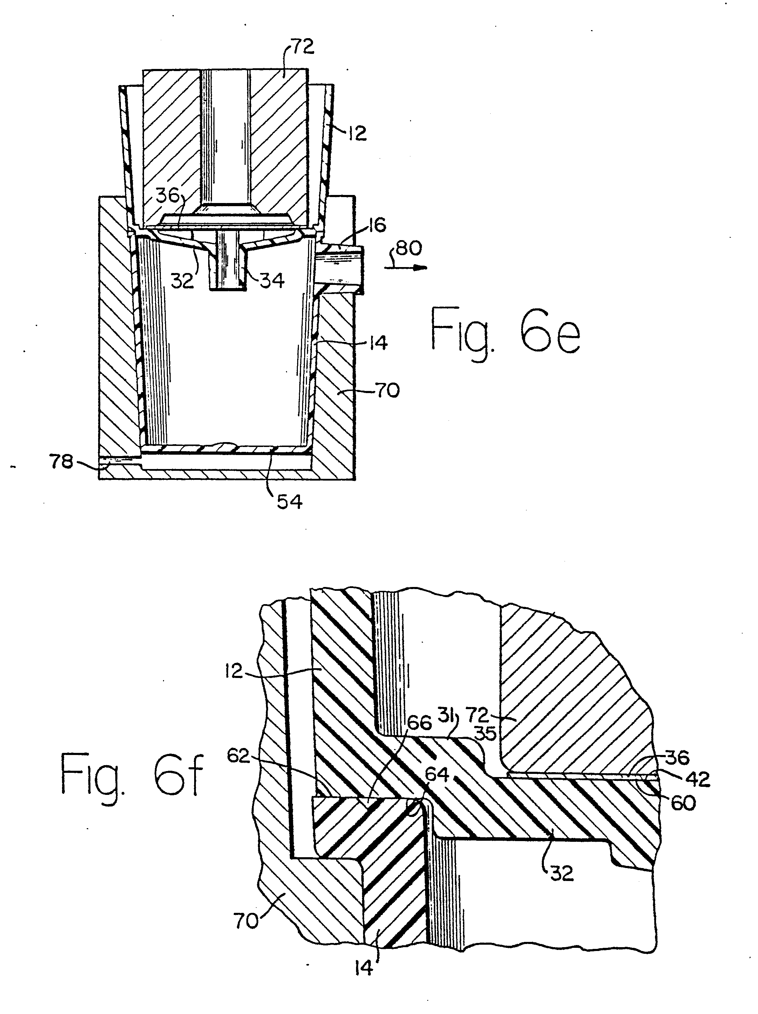

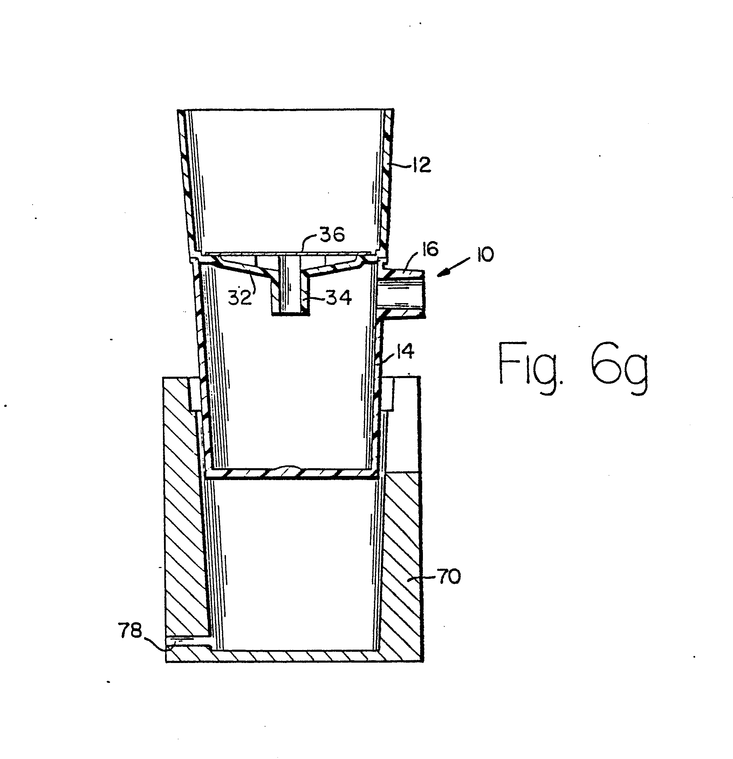

Subsequent to the placement of the lower chamber portion 14 in assembly fixture 70, the upper chamber portion 12 is positioned in place on the lower chamber portion 14 in the arrangement the entire unit will take upon the various parts thereof being joined together [Fig. 6c]. In this connection, the engaging flanges 28, 30 of the receptacles 14, 12, respectively, are adjacent each other before being joined together so that the opposing surfaces 62, 64 thereof, as shown in the enlarged detail in Fig. 2, will be properly adhered together upon final assembly. In the next step in the sequence of steps, Fig. 6d shows the placement of filter membrane 36 so that the outer annular edge 60 thereof engages the surface 42 on the lower wall 32 of upper chamber 12. At this point in the procedure, as shown in Figs. 6c and 6d, the spout 16 is connected to a vacuum source 80 in order to hold the various parts in place during the sonic welding procedure, to be discussed below. Fig. 6e shows the lowering of the embedding horn 72 so that the lower energy directing surface 74 thereof is simultaneously engaging the outer annular edge 60 of membrane filter 36 for embedding the filter membrane and simultaneously joining together the engaging surfaces 62, 64 of the upper and lower chambers 12, 14. During this application of sonic welding energy, the vacuum source 80 continues to be connected to the spout 16 for maintaining the parts in proper engagement with each other during this simultaneous connection of the three components of the unit of the invention together. Fig. 6f shows the details of the parts actually being joined together during the simultaneous sonic welding procedure, as described above in Figs. 6e. Thus, as can be seen, the outer annular edge 60 of filter membrane 36 is being joined to surface 42 of the upper receptacle bottom wall 32, while simultaneously, opposed surfaces 62, 64 of upper and lower chambers 12, 14 are being joined together with the utilization of a single annular energy director ring 66 on surface 64. Finally, as shown in Fig. 6g, the entire unit 10 fully assembled and joined together is removed from assembly fixture 70 after the raising of the sonic welding horn 72 out of engagement with the assembled unit 10.

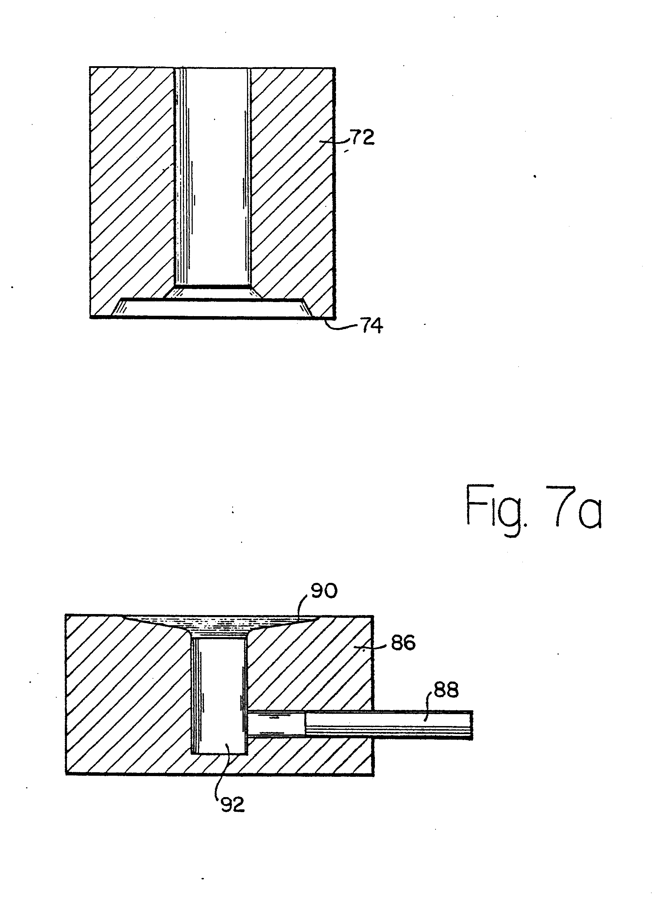

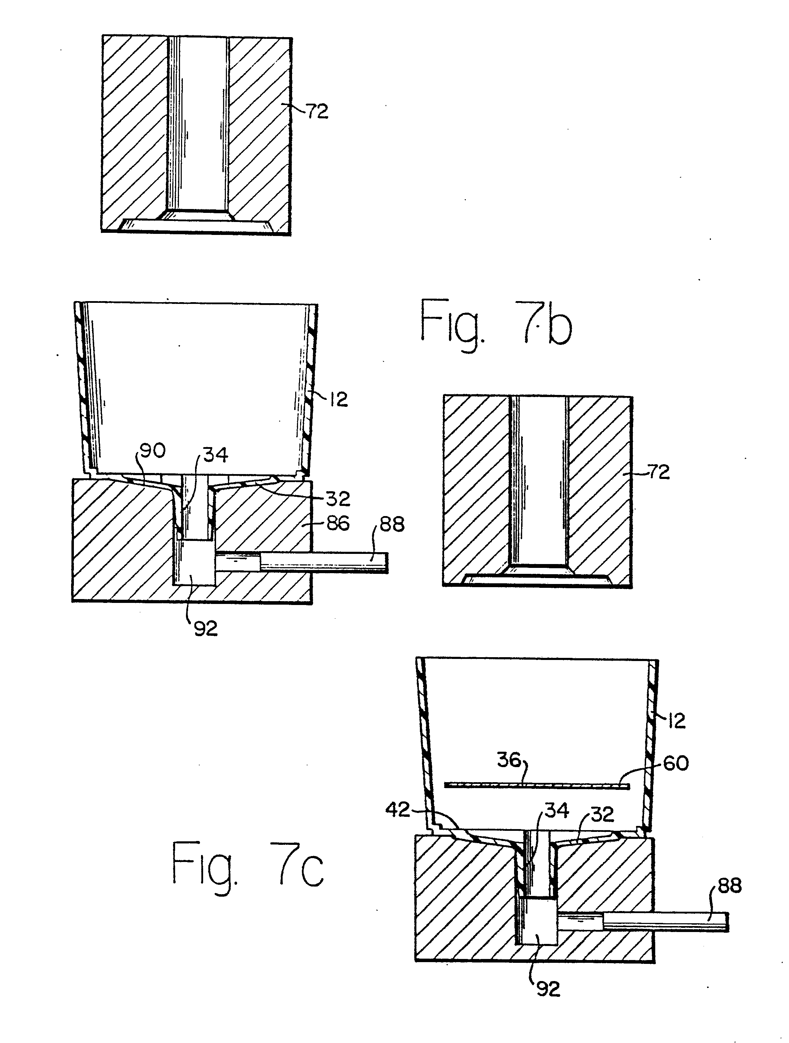

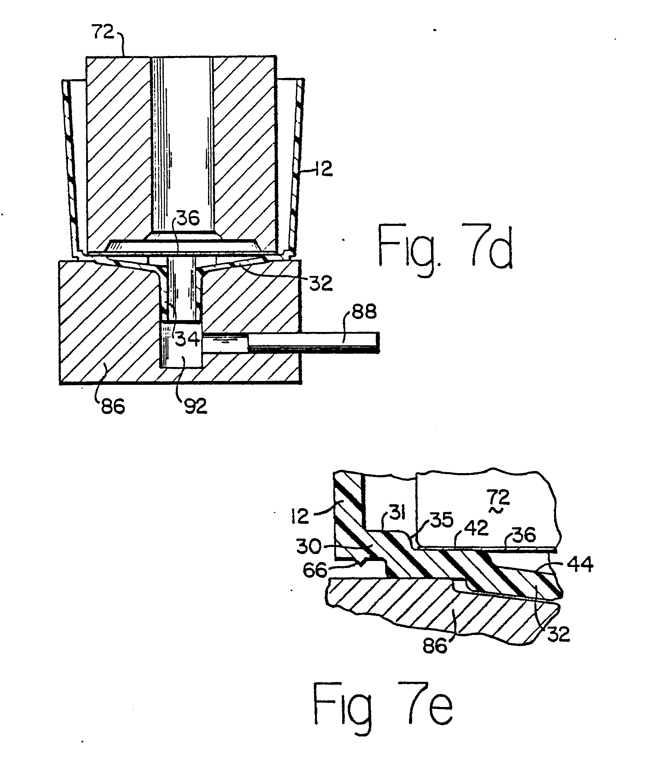

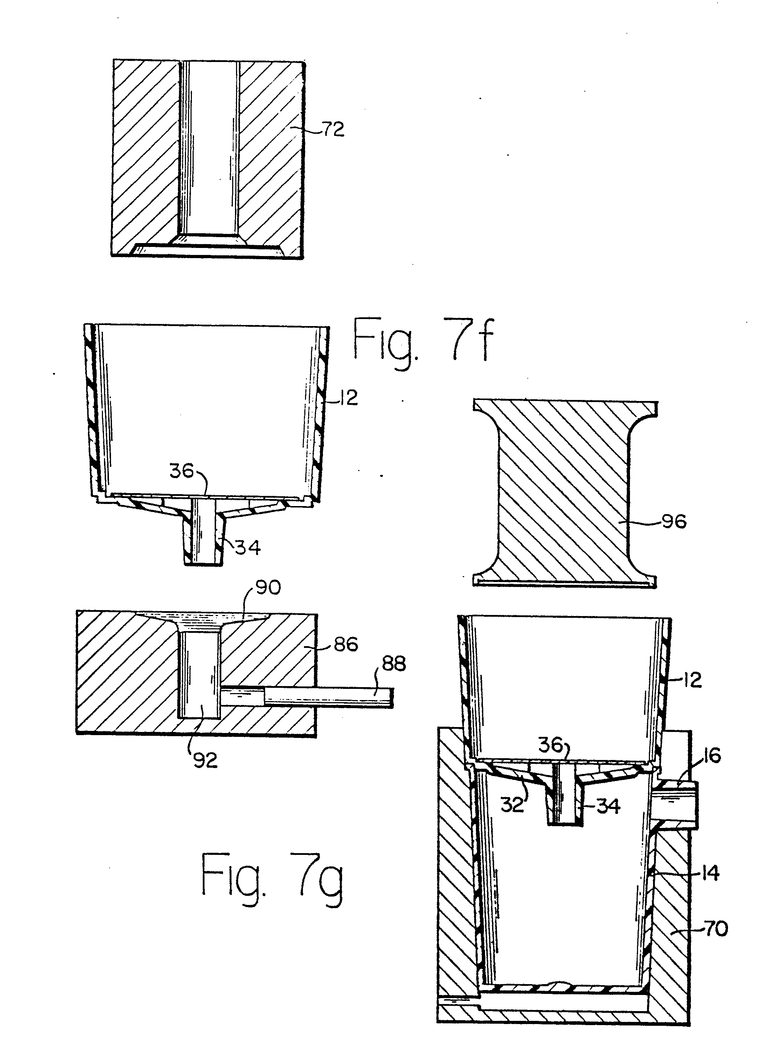

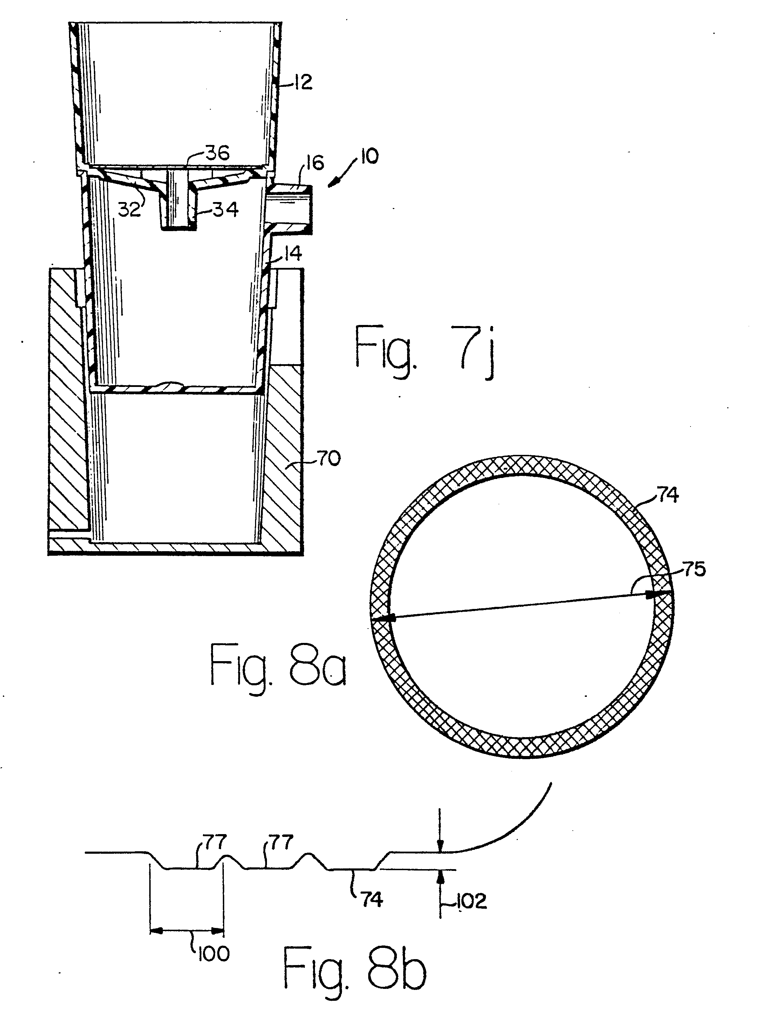

Referring to Figs. 7a-7j, the same procedures take effect except that this arrangement shows an alternative procedure for joining the parts of the unit together in a two-step operation. Thus, in this arrangement, as shown in Fig. 7a, a separate embedding fixture 86 is shown having a spout arrangement 88 for connection to a vacuum source with the spout being in connection with a space 92 in Fixture 86 for maintaining a flow communication in the area of surface 90 with the vacuum source. Thus, as shown in Fig. 7b, the upper chamber 12 is positioned on the embedding fixture 86 with the lower surface 32 thereof engaging the surface 90 of embedding fixture 86. During this arrangement, the spout 88 is connected to a vacuum source. Then, as shown in Fig. 7c, a filter membrane is placed on the lower surface 32 in much the same manner as took place in the previous arrangement shown in the series of steps in Fig. 6. Thus, filter membrane 36 has the outer annular edge 60 thereof placed in engagement with the annular surface 42 on the lower wall 32 of upper chamber 12. Then, as shown in Fig. 7d, an embedding horn 72 is lowered so that the engaging surface 74 thereof engages the outer annular edge 60 of membrane 36 and joins the membrane 36 to the upper chamber 12 by sonic welding energy. Details of this joining are similar to the details of the single joining procedure shown in Fig. 6 as indicated in Fig. 7e. In this case, however, only the outer annular edge 60 of filter membrane 36 is being joined to surface 42 of the upper receptacle 12.

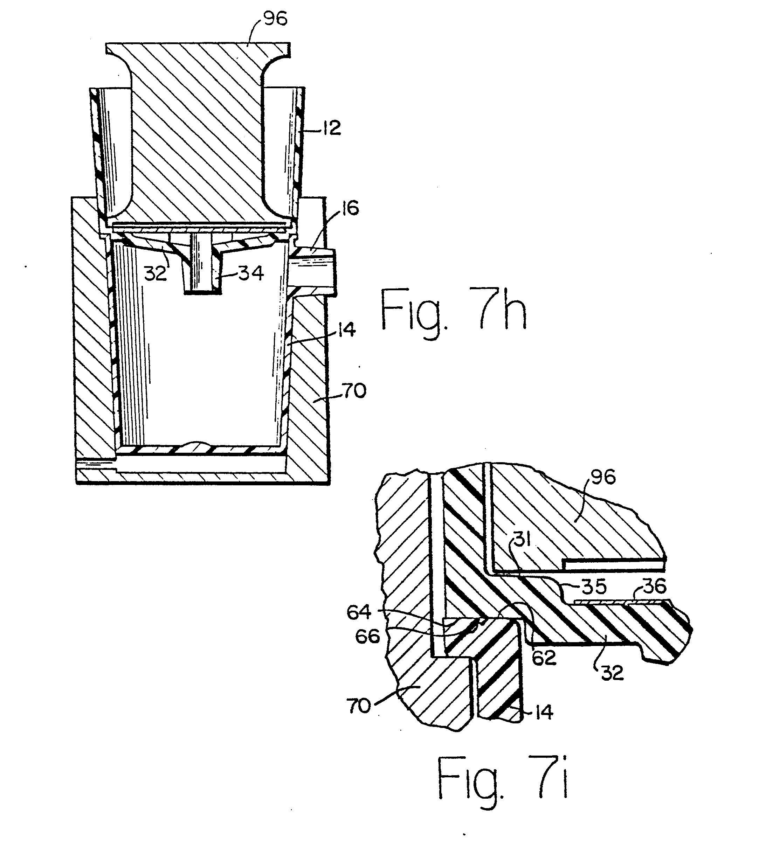

As shown in Fig. 7f, the two component joined upper receptacle is then removed from the embedding fixture 86, once the embedding horn 72 is raised out of engagement with the upper receptacle or chamber 12. Thereafter, the lower chamber 14 is placed in assembly fixture 70 in the same manner as previously discussed and the combined upper receptacle or chamber 12 and membrane 36 are placed in position over the lower chamber 14 for the subsequent second sonic welding application by an assembly horn 96 [Fig. 7(g)]. Then, assembly horn 96 is lowered for engaging the upper and lower receptacles 12, 14 as shown in Fig. 7h. The positioning of the various components together for this second sonic welding application is shown in detail in Fig. 7i wherein the opposed surfaces 62, 64 are joined together so that the two component membrane-upper receptacle is joined together to the lower receptacle or chamber 14. Again, annular energy director 66 may be utilized to enhance the joining of the two parts together. Again, in this connection, more than one annular energy director 66 may be utilized on surface 64 for the joining thereof to surface 62. Finally, as shown in Fig. 7j, the entire unit is removed from the assembly fixture 70 in its final form in one single part.

Referring now to Figs. 8a and 8b, a representative configuration of knurl pattern for use on the bottom surface 74 of the sonic energy horn is illustrated. As purely illustrative of the dimensions of a knurled surface 74, the horn ring itself may have a diameter 75 of about 58.37 millimeters. The depth 102 of the individual knurled ridges 77 may be about 0.05 to 0.10 millimeters while the width 100 of the individual ridges 77 may be about 0.254 millimeters.

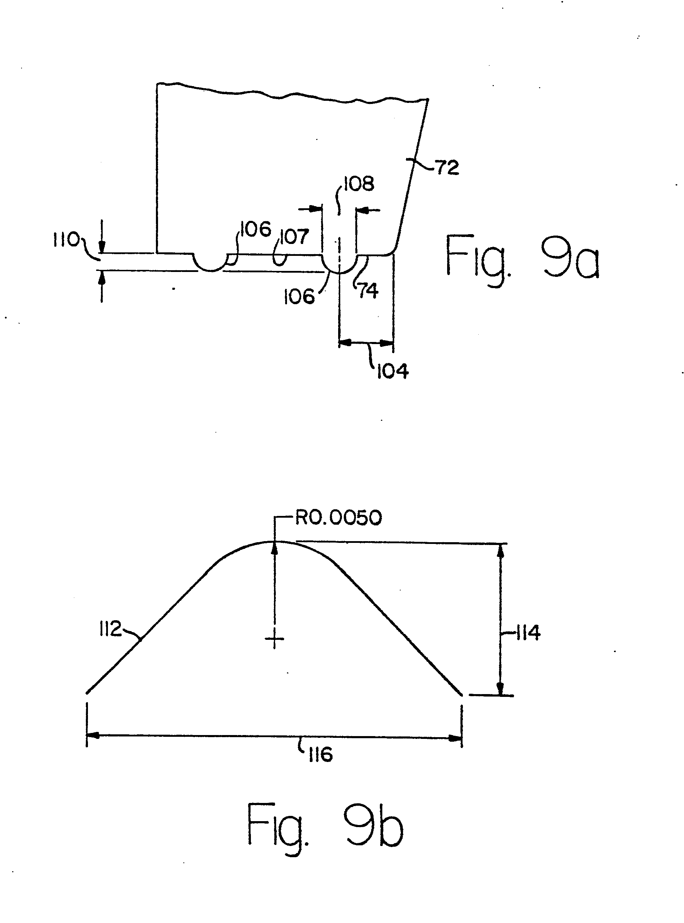

Referring to Fig. 9a, an alternative arrangement is shown for the bottom engaging surface 74 of a horn 72. That is, a plurality of spaced rings or ridges 106 may be utilized on the surface for engaging the surfaces to be joined together. The rings 106 serve in the same manner as the ridges 77 on the knurled surface for directing the energy of the horn more intensely toward the surfaces to be joined. Thus, a plurality of spaced rings 106 may be positioned on the surface 74. As representative of the dimensions of the annular rings 106, the dimension 108 may be, for example, 0.355 millimeters while the height 110 of the rings may be about 0.17 millimeters. The distance 104 shown in Fig. 9a may be 0.939 millimeters. It is to be understood, however, that these dimensions are being provided as illustrative only of dimensions of knurled patterns or annular rings to serve as energy directors on the bottom surfaces of the horns utilized in the process of the invention. Finally, referring to Fig. 9b, an alternative arrangement of annular ring 112 is shown. As can be seen, the shape of the ring 112, as shown in cross-section in Fig. 9b, has a more sloped surface rather than the rounded surface of the energy directors or rings 106 as shown in Fig. 9a. In this connection, the dimension 116 shown in Fig. 9b is about 0.05 millimeters while the dimension 114 is about 0.2 millimeters.

As further illustrative of the invention herein, a representative filter material may be, for example, cellulose nitrate, cellulose acetate, polytetrafluoroethylene, polycarbonate, or nylon. The filter material may be a 0.2 micron or a 0.45 micron filter, for example. The unit body may be comprised of a heat degradable thermoplastic material such as polyethylene, polypropylene or polystyrene.

Thus, as can be seen from above, there is provided in accordance with this invention, a unitary throw-away structure for use in the laboratory environment for filtering biological fluids in a single use operation and a process for making such a unit. The arrangement is such, that the user has only to remove the cap on the top of the unit and introduce the liquid to be filtered into the top portion of the unit. The membrane is fixed in place so that it cannot be shifted or moved in any way out of alignment for proper filtration. Moreover, the unit may be made by a single or a two-step procedure which may be incorporated in a simplified manner into a production line for mass production of the throw-away units of the invention.

If a vacuum is to be applied to increase the speed of separation, the user need only place the adapter 18 on spout 16 and apply a vacuum source to nozzle 18. The filtrate passes through the membrane, down the surface 44, through the opening 33 formed in annular spout 34 in bottom wall 32 of upper unit 12. The filtrate gathers in the bottom portion 14 of the unit for subsequent decanting through spout 16. It will be understood, that in certain filtering operations, that the adapter 18 is not used because a vacuum application is not necessary. Under these circumstances, the lab technician merely has to introduce the liquid for separation into the top 12 and recap the unit and wait for the proper separation to take place. Once the filtrate is obtained in bottom unit 14, it can be rapidly decanted through the enlarged spout 16, without any interference by displacement air passing through the spout in the opposite direction because of its dimension.

Because the unit of the invention is comprised of only four parts, including the membrane, all of which are joined into a unitary structure for use, the unit is particularly appropriate and inexpensive for single use applications. Moreover, it is easily manufactured using mass production techniques, as discussed above.

While the methods and forms of apparatus herein described constitute preferred embodiments of this invention, it is to be understood that the invention is not limited to these precise methods and forms of apparatus, and that changes may be made therein without departing from the scope of the invention which is defined in the appended claims.

## Claims

1. An integral structure for laboratory use in filtering biological fluids, characterized by

(a) an upper container having a substantially vertical wall defining a first liquid receiving chamber;

(b) a lower container having a substantially vertical wall and a closed bottom integral therewith defining a second filtrate receiving chamber;

(c) said upper chamber having an open top and a substantially closed bottom wall;

(d) said closed bottom wall of said upper chamber being a bottom wall integral with said vertical wall of said upper container;

(e) said integral bottom wall of said upper chamber having an opening disposed centrally thereof, said opening providing flow communication between said first and second chambers;

(f) said integral bottom wall of said upper chamber having a flat surface adjacent to said vertical wall of said upper container and substantially perpendicular thereto;

(g) a filter membrane positioned on said upper container bottom wall;

(h) first cooperating opposed joined surfaces between said upper container and said bottom container;

(i) second cooperating joined surfaces between the outer edge of said filter membrane and said flat surface of said integral bottom wall; and

(j) a pour spout in said vertical wall of said lower container;

(k) said pour spout being dimensioned to allow simultaneously the pouring of liquid from said lower chamber and the introduction of replacement air into said lower chamber.

2. The structure of Claim 1, further characterized by

(a) said first and second cooperating joined surfaces being joined by sonic welding.

3. The structure of Claim 1, further characterized by

(a) said first cooperating opposed surfaces being a flange integral with the bottom edge of said vertical wall of said upper container, and a flange integral with the top edge of said vertical wall of said bottom container.

4. The structure of Claim 1, further characterized by

(a) said integral bottom wall of said upper container including a plurality of spaced apart ribs extending between said flat surface and said centrally disposed opening.

5. The structure of Claim 1, further characterized by

(a) an adapter for said pour spout; and

(b) said adapter being for connecting said pour spout to a vacuum source.

6. The structure of Claim 1, further characterized by

(a) a cap for closing said open end of said upper container.

7. The structure of Claim 4, further characterized by

(a) said integral bottom wall of said upper container diverging downwardly from said flat surface to said central opening in the areas between said spaced apart ribs.

8. The structure of Claim 1, further characterized by

(a) a flange integral with said upper chamber bottom wall, surrounding said central opening, and depending downwardly therefrom; and

(b) said flange defining a flow passage from said central opening into said lower container.

9. A process for producing a three-component integral structure for laboratory use in filtering biological fluids in a single step characterized by the steps of

(a) placing in a first placing step, the portion forming the lower chamber of said unit in an assembly fixture, said lower chamber portion having an integral spout and an integral upper annular flange;

(b) placing in a second placing step, the portion forming the upper chamber of said unit in said assembly fixture of said first placing step, said upper chamber portion having an integral lower annular flange;

(c) said first and second placing steps serving to place said integral upper annular flange of said lower chamber adjacent said integral lower annular flange of said upper chamber in face-to-face relation;

(d) placing in third placing step a membrane filter adjacent the bottom surface of said upper chamber;

(e) said upper chamber bottom surface having a second flange for engaging the outer annular edge of said membrane filter in said third placing step;

(f) said upper chamber bottom surface having a central opening providing flow communication between said upper and lower chambers;

(g) applying in a first applying step a vacuum source to said spout for maintaining the opposed surfaces of said integral flanges and said filter membrane from said first, second and third placing steps in engagement with each other;

(h) applying in a second applying step sonic energy to said opposed surfaces of said integral flanges and said filter membrane from said first, second and third placing steps to join together said opposed surfaces; and

(i) removing said three component integral structure from said assembly fixture.

10. The process of Claim 9, further characterized by

(a) said second applying step being carried out with a sonic energy horn with a knurled energy directing surface.

11. The process of Claim 9, further characterized by

(a) said second applying step being carried out with a sonic energy horn with an energy directing surface having at least one annular ring positioned thereon.

12. The process of Claim 9, further characterized by

(a) at least one energy director incorporated into at least one of the opposed flange surfaces from said first and second placing steps.

13. A two-step process for producing a three-component integral structure for laboratory use in filtering biological fluids, characterized by the steps of

(a) placing in a first placing step the portion forming the upper chamber of said unit in an assembly fixture;

(b) said upper portion having a substantially closed bottom wall with a central opening, an annular integral inner flange, and an annular integral outer flange;

(c) placing in a second placing step a membrane filter adjacent said bottom wall so that the outer annular edge of said membrane filter engages said integral inner flange;

(d) applying in a first applying step a vacuum source to said central opening for holding said membrane filter to said inner annular flange;

(e) applying in a second applying step sonic energy to the opposed surfaces of said inner flange and said membrane filter for the joining of said upper chamber and said membrane filter into a single unit;

(f) placing in a third placing step the portion forming the lower chamber of said unit in an assembly fixture, said lower chamber portion having an integral spout and an upper annular flange;

(g) placing in a fourth placing step the single unit formed in said second applying step in said assembly so that the outer annular flange of said bottom wall of said single unit engages the upper annular flange of said lower chamber portion;

(h) applying in a third applying step a vacuum to said integral spout;

(i) applying in a fourth applying step sonic energy to the opposed flange surfaces of said fourth placing step to join said unit from said second applying step to said lower chamber; and

(j) removing said single integral unit from said fourth applying step from said assembly fixture.

14. The process of Claim 13, further characterized by

(a) said second and fourth applying steps being carried out with a sonic energy horn with a knurled energy directing surface.

15. The process of Claim 13, further characterized by

(a) said second and fourth applying steps being carried out with a sonic energy horn with an energy directing surface having at least one annular ring positioned thereon.

16. The process of Claim 13, further characterized by

(a) at least one energy director incorporated into at least one of the opposed flange surfaces from said fourth placing step.

17. An integral structure for laboratory use in filtering biological fluids having an upper and lower chamber with a central opening therebetween, said opening having an integral membrane filter thereover, said lower chamber having a large pour spout, and said integral structure produced by the process of Claim 9.

18. An integral structure for laboratory use in filtering biological fluids having an upper and lower chamber with a central opening therebetween, said opening having an integral membrane filter thereover, said lower chamber having a large pour spout, and said integral structure produced by the process of Claim 13.

Fig. 1

Fig. 2

Fig. 3

Fig. 4

Fig. 5

Fig. 6a

Fig. 6b

Fig. 6c

Fig. 6d

Fig. 6e

Fig. 6f

Fig. 6g

Fig. 7a

Fig. 7b

Fig. 7c

Fig. 7d

Fig 7e

Fig. 7f

Fig. 7g

Fig. 7h

Fig. 7i

Fig. 7j

Fig. 8a

Fig. 8b

Fig. 9a

RO.OO5O

Fig. 9b